# EUROPÄISCHE PATENTSCHRIFT

(11) **EP 2 689 506 B1**
(45) Veröffentlichungstag und Bekanntmachung des Hinweises auf die Patenterteilung: **13.05.2015**
(21) Anmeldenummer: 12715635.4
(22) Anmeldetag: 22.03.2012
(51) Int. Cl.: H02H 1/00, H02H 3/04, H02H 11/00

(54) **HAUSGERÄT MIT SCHUTZSCHALTUNG**
DOMESTIC APPLIANCE WITH PROTECTION CIRCUIT
APPAREIL MÉNAGER À CIRCUIT DE PROTECTION

(30) Priorität: 22.03.2011 CN 201110075863; 12.03.2012 CN 201210074433
(43) Veröffentlichungstag der Anmeldung: 29.01.2014
(73) Patentinhaber: BSH Hausgeräte GmbH, 81739 München (DE)
(72) Erfinder: SCHRÖDER, Bernd, Nanjing, 210008 (CN)
(86) Internationale Anmeldenummer: PCT/EP2012/055134
(87) Internationale Veröffentlichungsnummer: WO 2012/127007

(56) Entgegenhaltungen:
- WO-A2-2007/092815
- GB-A- 2 242 084
- US-A- 4 843 514
- US-A- 6 057 996
- US-A1- 2009 212 967

## Beschreibung

### Hintergrund der Erfindung

Die vorliegende Erfindung betrifft im Allgemeinen Hausgeräte mit einem Netzkabel, das einen Netzstecker zum Anschließen des Hausgeräts an eine Energieversorgung aufweist, und einer Steuerungseinrichtung zur Betriebssteuerung des Hausgeräts, wobei der Netzstecker eine Schutzschaltung aufweist.

### Stand der Technik

Hausgeräte wie beispielsweise Warmwasserbereiter, und insbesondere Warmwasserspeicher, sind leistungsstarke Verbraucher, die mögliche Stromfehlfunktionen erfassen und verarbeiten sollen. Durch Fehler in der Hausanlage oder in der Elektrik des Warmwasserbereiters können Fehlerströme entstehen, die z.B. Teile, die im Normalbetrieb ohne Spannung beaufschlagt sind, unter Spannung setzen, was zu Verletzungen einer Person führen kann. Ähnliche Fehlerfälle können beim Betrieb aller Hausgeräte in einem Haushalt entstehen.

Um die Sicherheit von Personen zu gewährleisten ist es üblich, dass sogenannte Fehlerstromschutzschaltungen eingesetzt werden, die Stromfehler erfassen und entsprechend eine Notabschaltung bewirken. Auch bekannt ist der Einsatz von Schmelzsicherungen oder dergleichen. Fehlerstromschutzschaltungen werden eingesetzt, um Kriechströme in den Erdleitungen zu detektieren, was im schlimmsten Fall eine Person verletzen kann oder indirekt zu Hausbränden führen könnte.

Die Fehlerstromschutzschaltungen trennt bei Überschreiten eines bestimmten Differenzstroms, in Hausanlagen und öffentlichen Gebäuden den überwachten Stromkreis üblicherweise allpolig, das heißt alle Leiter bis auf den Schutzleiter, vom restlichen Netz. Differenzströme können auftreten, wenn etwa durch den menschlichen Körper oder über eine schadhafte Isolierung ein (Fehler-)Strom fließt. Die Summe aller durch den Fehlerstromschutzschalter fließenden Ströme muss bei einer intakten Anlage Null sein. Anders ausgedrückt muss der Strom zum Verbraucher genauso groß sein wie der Strom, der vom Verbraucher zurückfließt.

Der Vergleich erfolgt beispielsweise in einem Summen-Stromwandler. Dieser hat zwei oder mehr durchlaufende Leitungsadern (Primärwicklungen). Sie sind so geführt, dass ihre Induktionswirkung sich im Normalfall gegenseitig aufhebt, kein Magnetfluss im Wandlerkern induziert wird und kein Sekundärstrom fließt. Der Wandler berechnet die Summe aller Ströme, die im Normalfall Null ist, und im Falle eines Fehlers erfolgt eine allpolige Abschaltung des Verbrauchers, d.h. des Hausgeräts.

Schutzschaltungen für elektrische Verbraucher gemäß dem Stand der Technik sind in der US 2009/212967 A1, der US 6 057 996 A, der WO 2007/092815 A2 GB 2 242 084 A und in der US 4 843 514 A offenbart.

Zwischen Verbraucher und Fehlerstromschutzschaltung kann aber keine direkte Kommunikation aufgebaut werden, damit beispielsweise signalisiert werden kann, dass das Steuergerät der Fehlerstromschutzschaltung einen internen Fehler oder desgleichen aufweist.

### Der Erfindung zugrundeliegende Aufgabe

Der Erfindung liegt die Aufgabe zugrunde, ein verbessertes Hausgerät bereitzustellen, das sicher betrieben werden kann und mögliche Fehler der elektrischen Funktionskomponenten erfasst und entsprechend signalisiert.

### Erfindungsgemäße Lösung

Die Lösung der gestellten Aufgabe gelingt durch ein Hausgerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Das erfindungsgemäße Hausgerät ist mit einem Netzkabel versehen, das einen Netzstecker zum Anschließen des Hausgeräts an eine Energieversorgung aufweist, und weiter eine Steuerungseinrichtung zur Betriebssteuerung des Hausgeräts umfasst, wobei der Netzstecker eine Schutzschaltung aufweist, wobei zwischen Steuerungseinrichtung und Schutzschaltung ein Kommunikationskanal zur Signalvermittlung aufbaubar ist. Bei der Schutzschaltung kann sich insbesondere um einen Fehlerstromschutzschalter, ebenfalls als ELCB bekannt, handeln. Ferner kann die Schutzschaltung auch als Leitungsschutzschalter, Fehlerstromschutzschalter oder ein Fehlerstromschutzschalter mit integriertem Leitungsschutzschalter ausgebildet sein. Der Fehlerstromschutzschalter, der auch als FI-Schalter oder RCD (Residual Current protective Device) bekannt ist, überwacht das Netz auf eine Differenzstromstärke und trennt gegebenenfalls allpolig den Fehlerstromkreis ab.

Mittels des Kommunikationskanals zwischen Schutzschaltung und Steuerungseinrichtung des Hausgeräts kann eine gegenseitige Signalisierung bereitgestellt werden, um somit Fehlfunktionen aller Art zu erfassen. So kann insbesondere die Schutzschaltung einen internen Fehler (der Schutzschaltung) zu der Steuerungseinrichtung des Hausgeräts signalisieren, um somit eine Inbetriebnahme des Hausgeräts mit fehlerhafter Schutzschaltung zu vermeiden. Im Stand der Technik war bisher die Inbetriebnahme mit defekter Schutzschaltung möglich, welches zu einem unsicheren und gefährlichen Betrieb für einen möglichen Benutzer des Hausgeräts geführt hat. Folglich können insbesondere Klasse I Hausgeräte für den Haushalt betriebssicherer hergestellt werden. Die Klasse I Geräteklasse umfasst unter anderem Geschirrspülmaschinen, Waschmaschinen, Kühlgeräte, Dunstabzugshauben etc. Somit können alle diese beispielhaft aufgeführten Gerätearten mittels der vorliegenden Erfindung sicherer für einen Benutzer hergestellt und bereitgestellt werden.

### Bevorzugte Ausgestaltung der Erfindung

Bevorzugt weist die Steuerungseinrichtung eine erste Kommunikationsschnittstelle für den Kommunikationskanal auf, die eingerichtet ist elektrische Signale zwischen Steuerungseinrichtung und Schutzschaltung zu vermitteln. Bei der Kommunikationsschnittstelle kann es sich um eine Software oder eine Hardwareschnittstelle handeln, die es der Steuerungseinrichtung erlaubt, mögliche Kontrollsignale an die Schutzschaltung zu versenden. Die Schnittstelle weist ein geeignetes Protokoll auf, das die Signalisierung steuert. Entsprechend weist die Schutzschaltung ein Steuergerät mit einer zweiten Kommunikationsschnittstelle auf, um geeignete Signale zwischen Schutzschaltung und Steuerungseinrichtung zu vermitteln. Somit kann eine effektive Datenkommunikation mittels eines geeigneten Protokolls zwischen Schutzschaltung und Steuerungseinrichtung des Hausgeräts gewährleistet werden.

In einer bevorzugten Ausgestaltung weist das Netzkabel eine Zusatzleitung auf, über welche der Kommunikationskanal zwischen Steuerungseinrichtung des Hausgeräts und Schutzschaltung aufbaubar ist.

In vorteilhafter Weise ist die Zusatzleitung eingerichtet, um ein dediziertes Signal vom Steuergerät der Schutzschaltung zur Steuerungseinrichtung des Hausgeräts zu vermitteln. Bei dem Signal kann es sich um ein Fehlersignal in Form eines einzelnen Pulses handeln, das eine Fehlfunktion der Schutzschaltung signalisiert. Infolgedessen kann die Steuerungseinrichtung des Hausgeräts beispielsweise eine Abschaltung bewirken oder alternativ die Fehlfunktion einem Benutzer signalisieren.

Es ist bevorzugt dass der Kommunikationskanal mittels mindestens einer Versorgungsleitung eines mehrpoligen Netzkabels des Hausgeräts bereitstellbar ist. Somit kann insbesondere der Nullleiter des Netzkabels für die Kommunikation zwischen Steuerungsgerät der Schutzschaltung und Steuerungseinrichtung des Hausgeräts eingesetzt werden. Insbesondere kann auch der Erdleiter bzw. der Schutzleiter zur Kommunikation eingesetzt werden.

Denkbar ist auch die Implementierung einer "Powerline"-Datenkommunikation zwischen den Teilnehmern oder sogar eine Funkverbindung zur Kommunikation.

Gemäß einer Ausführungsform ist die Schutzschaltung eingerichtet, um eine Fehlfunktion des Hausgeräts zu erfassen. Somit kann beispielsweise ein Leckstrom über die Erdleitung erfasst und signalisiert werden. Die Fehlfunktion wird bevorzugt mittels eines Fehlersignals aufgezeigt, welches z.B. zu einer Notabschaltung des Hausgeräts führen kann.

In einer vorteilhaften Ausführungsform weist die Schutzschaltung eine interne Spannungsversorgung, beispielsweise einen Akkumulator, auf. Folglich ist die Schutzschaltung auch im Falle eines Stromausfalls funktionsbereit.

Erfindungsgemäß bevorzugt weist das Hausgerät eine Anzeige und/oder eine akustische Anzeigevorrichtung auf, die eingerichtet sind, eine Fehlfunktion der Schutzschaltung zu signalisieren. Falls das Steuergerät der Schutzschaltung ein Fehlersignal für die Steuerungseinrichtung des Hausgeräts abgibt, kann folglich mittels der Anzeigen einem Benutzer der Fehlerfall angezeigt werden. Infolgedessen kann eine Reparatur oder eine Geräteaustausch durchgeführt werden. Weiter kann im Fehlerfall einem Benutzer signalisiert werden, dass er alle am Netz angeschlossenen Geräte vom Netz trennen soll. Dies ist insbesondere vorteilhaft, wenn die Hausinstallation einen Stromfehler aufweist und Erdleitungen oder Nullleiter plötzlich mit Strom beaufschlagt sind, welches beispielsweise Gehäuseteile der angeschlossenen Verbraucher unter Spannung setzten würde. Somit können Verletzungen oder Brände vorgebeugt werden.

Die Schutzschaltung kann ferner ausgebildet sein um den Erdleiter bzw. Schutzleiter im Fehlerfall aufzutrennen. Dies kann ebenfalls zu einem sicheren Betrieb führen, da mögliche Fehlerströme über die Erdleitung nicht zurück in die Hausanlage gespeist werden würden.

### Kurzbeschreibung der Zeichnung

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.
Fig. 1 ein als Warmwasserbereiter ausgebildetes Hausgeräts gemäß der vorliegenden Erfindung; und
Fig. 2 eine schematische Ansicht der Gerätesteuerung gemäß der vorliegenden Erfindung.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

In der Beschreibung wird die vorliegende Erfindung anhand eines als Warmwasserbereiter ausgebildetes Hausgerät beschrieben, jedoch ist diese Beschreibung lediglich als eine mögliche Ausführungsform zu verstehen. Die vorliegende Erfindung ist auf alle mögliche Typen von Hausgeräten anwendbar. So kann das erfindungsgemäße Hausgerät als: Geschirrspülmaschine, Dunstabzugshaube, Herd, Backofen, Waschmaschine oder auch handgeführtes Kleingerät ausgebildet sein. Als besonders vorteilhaft hat sich die Implementierung der Erfindung für Klasse I Geräte für den Haushalt im Allgemeinen herausgestellt.

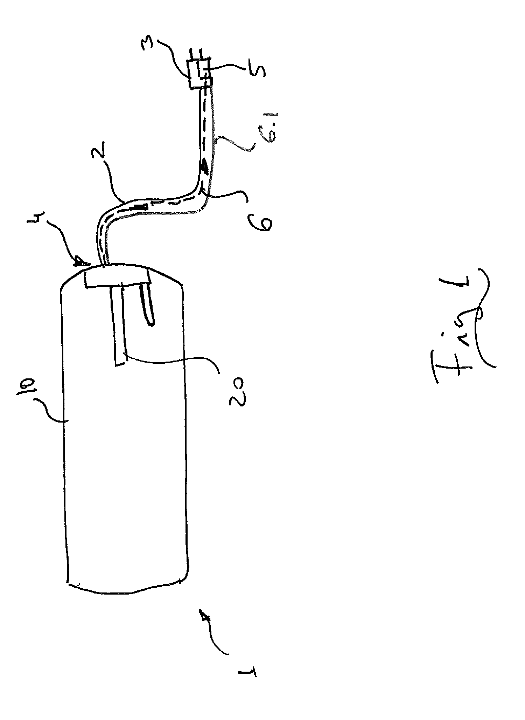

Fig. 1 zeigt einen Warmwasserbereiter 1 ausgebildet als Warmwasserspeicher gemäß der vorliegenden Erfindung. Der Warmwasserspeicher 1 weist beispielsweise eine Zylinderform auf, in welcher das zu erwärmende Wasser in einem Gehäuse 10 eingeschlossen ist. Das Gehäuse 10 kann beispielsweise aus metallischem Material bestehen aber andere Materialien sind ebenfalls möglich. Das Gehäuse 10 kann beispielsweise von einer Isolationsschicht umgeben werden, welches zu einer verbesserten Speicherung des bereits erwärmten Wassers führen kann. Gemäß dieser Ausführungsform stellt der Warmwasserspeicher eine horizontale Montage dar, jedoch andere Formen der Montage an einer Wand sind auch möglich, z.B. vertikal.

Der Warmwasserspeicher 1 weist einen Zulauf und einen Ablauf (beide nicht gezeigt) auf, aus welchem das erwärmte Wasser entnommen werden kann. Der Zulauf wird an einem Wassernetz angeschlossen, so dass der Warmwasserspeicher 1 Frischwasser zur Erwärmung und Speicherung erhalten kann. Innerhalb des Warmwasserspeichers ist eine Heizeinrichtung 20 angeordnet, welche wiederum mit Netzspannung mittels eines Netzkabels 2 gespeist werden kann. Die Heizeinrichtung 20 kann verschiedene Ausgestaltungen aufweisen. In der Fig. 1 ist die Heizeinrichtung 20 schematisch dargestellt. Der Warmwasserspeicher 1 wird im Betrieb mit Frischwasser befüllt, welches anschließend mit Hilfe der Heizeinrichtung 20 erwärmt bzw. erhitzt wird.

Der Netzstecker 3 weist einen FI-Schutzschalter (ELCB) 5 auf, der mögliche Leckströme über die Erdleitung der Hausanlage erfassen kann. Falls der Schutzschalter 5 eine Fehlfunktion aufweist wird erfindungsgemäß ein Fehlersignal generiert, welches über den Kommunikationskanal 6 an eine Steuerungseinrichtung 4 des Warmwasserbereiters 1 vermittelt wird. Die Steuerungseinrichtung 4 kann den Fehlerfall signalisieren oder sogar die Abschaltung des Warmwassergeräts bewirken. Die Kommunikation zwischen Steuergerät 9 des Schutzschalters 5 kann gemäß der vorliegenden Erfindung über eine dedizierte Signalleitung 6.1 am Netzkabel 2 ausgeführt werden, aber auch eine Kommunikation über den Nullleiter PE mit Hilfe eines geeigneten Protokolls ist implementierbar.

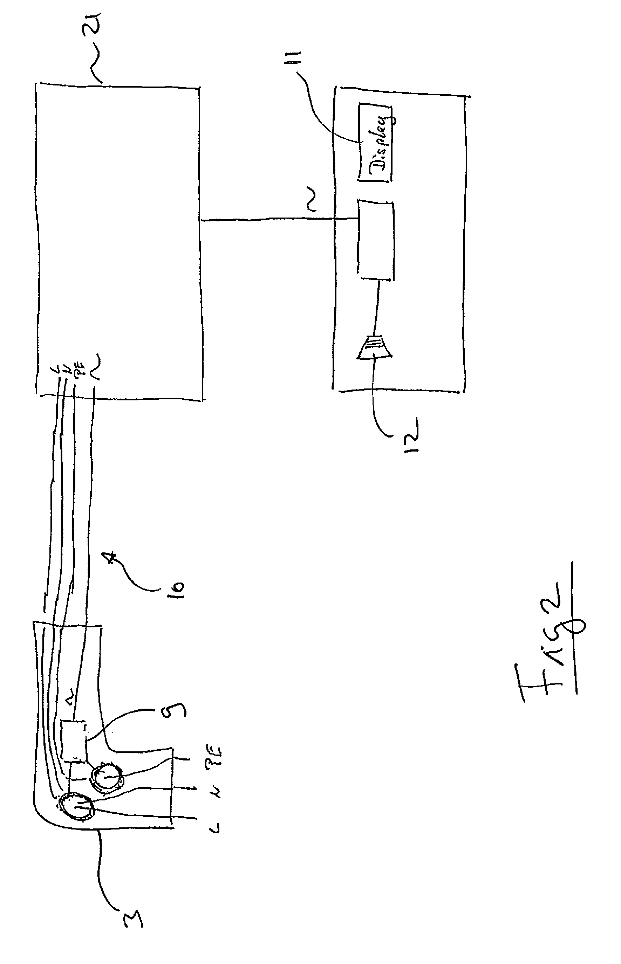

Fig. 2 zeigt schematisch den Aufbau der Steuerungselektronik des erfindungsgemäßen Warmwasserbereiters als eine erste mögliche Ausführungsform.

Die dargestellte Steuerelektronik könnte auch die Steuerung eines Kühlgeräts, einer Waschmaschine, einer Geschirrspülmaschine oder desgleichen darstellen. Die Beschreibung der Steuerung eines Warmwasserbereiters stellt lediglich eine erste mögliche nichteinschränkende Ausführungsform der vorliegenden Erfindung dar.

Der Warmwasserbereiter weist ein Hauptmodul 21 auf, welches die Leistungselektronik umfasst. Das Netzkabel 2 versorgt die Leistungselektronik des Hauptmoduls 21 des Warmwasserbereiters mit elektrischer Energie. An dem Hauptmodul 21 ist die Heizeinrichtung des Warmwasserbereiters angeschlossen, so dass das Frischwasser auf den gewünschten Wert erhitzt werden kann.

Das Netzkabel 2 ist hier als dreiadriges Kabel mit vier Versorgungsleitungen 10 implementiert. Der Netzstecker 3 weist einen Schutzschalter 5 mit einem Steuergerät 9 auf. Die Signalkommunikation zwischen Steuergerät 9 und Steuerungseinrichtung des Warmwasserspeichers geschieht in dieser Ausführungsform über eine Versorgungsleitung 10 des Netzkabels, nämlich über den Nullleiter. Bei einem Fehler des Schutzschalters 5 kann die Steuerungseinrichtung 4 ein Fehlersignal über z.B. den Nullleiter empfangen und entsprechend auswerten. Folglich kann über die Anzeige 11 der Fehler angezeigt werden, oder über den Lautsprecher 12 am Warmwasserbereiter die Fehlfunktion mittels eines Alarms dem Benutzer vermittelt werden.

Das erfindungsgemäße Hausgerät gewährleistet einen sicheren Betrieb, der auch Fehlfunktionen des Schutzschalters im Netzstecker des Netzkabels erkennt und entsprechend verarbeitet. Folglich können insbesondere Klasse I Hausgeräte für den Haushalt betriebssicherer hergestellt werden. Die Klasse I Geräteklasse umfasst unter anderem Geschirrspülmaschinen, Waschmaschinen, Kühlgeräte, Dunstabzugshauben, Herde, Backöfen etc. Somit können alle diese beispielhaft aufgeführten Gerätearten mittels der vorliegenden Erfindung sicherer für einen Benutzer hergestellt und bereitgestellt werden.

## Patentansprüche

1. Hausgerät (1) mit einem Netzkabel (2), das einen Netzstecker (3) zum Anschließen des Hausgeräts (1) an eine Energieversorgung aufweist, und einer Steuerungseinrichtung (4) zur Betriebssteuerung des Hausgeräts (1), wobei der Netzstecker (3) eine Schutzschaltung (5) aufweist, **dadurch gekennzeichnet, dass** zwischen Steuerungseinrichtung (4) und Schutzschaltung (5) ein Kommunikationskanal (6) zur Signalvermittlung aufgebaut ist.

2. Hausgerät (1) nach Anspruch 1, **dadurch gekennzeichnet, dass** die Steuerungseinrichtung (4) eine erste Kommunikationsschnittstelle für den Kommunikationskanal (6) aufweist, die eingerichtet ist elektrische Signale zwischen Steuerungseinrichtung (4) und Schutzschaltung (5) zu vermitteln.

3. Hausgerät (1) nach Anspruch 1 oder 2, **dadurch gekennzeichnet, dass** die Schutzschaltung (5) ein Steuergerät (9) mit einer zweiten Kommunikationsschnittstelle für den Kommunikationskanal (6) aufweist, die eingerichtet ist elektrische Signale zwischen Schutzschaltung (5) und Steuerungseinrichtung (3) zu vermitteln.

4. Hausgerät (1) nach einem der vorhergehenden Ansprüche, **dadurch gekennzeichnet, dass** der Kommunikationskanal (6) mittels einer Zusatzleitung (6.1) am Netzkabel (2) bereitgestellt ist.

5. Hausgerät (1) nach Anspruch 4, **dadurch gekennzeichnet, dass** die Zusatzleitung (6.1) eingerichtet ist, um ein dediziertes Signal vom Steuergerät (9) der Schutzschaltung (5) zur Steuerungseinrichtung (4) des Hausgeräts (1) zu vermitteln.

6. Hausgerät (1) nach einem der vorhergehenden Ansprüche 1 bis 4, **dadurch gekennzeichnet, dass** der Kommunikationskanal (6) mittels mindestens einer Versorgungsleitung (10) eines mehrpoligen Netzkabels (2) des Hausgeräts (1) bereitgestellt ist.

7. Hausgerät (1) nach einem der vorhergehenden Ansprüche, **dadurch gekennzeichnet, dass** der Kommunikationskanal (6) dergestalt ausgebildet ist, um eine bidirektionale und/oder unidirektionale Signalverbindung zu vermitteln.

8. Hausgerät (1) nach einem der vorhergehenden Ansprüche, **dadurch gekennzeichnet, dass** die Schutzschaltung (5) eingerichtet ist, um eine Fehlfunktion des Hausgeräts (1) zu erfassen.

9. Hausgerät (1) nach einem der vorhergehenden Ansprüche, **dadurch gekennzeichnet, dass** die Schutzschaltung (5) eingerichtet ist, um ein Fehlersignal bereitzustellen, welches eine Fehlfunktion der Schutzschaltung signalisiert.

10. Hausgerät (1) nach einem der vorhergehenden Ansprüche, **dadurch gekennzeichnet, dass** die Schutzschaltung (5) eine interne Spannungsversorgung aufweist.

11. Hausgerät (1) nach einem der vorhergehenden Ansprüche, **dadurch gekennzeichnet, dass** eine Anzeige (11) und/oder eine akustische Anzeigevorrichtung (12) am Hausgerät (1) vorgesehen ist/sind, die eingerichtet ist/sind eine Fehlfunktion der Schutzschaltung (5) zu signalisieren.

12. Hausgerät (1) nach Anspruch 11, **dadurch gekennzeichnet, dass** die Anzeige (11) bzw. die akustische Anzeigevorrichtung (12) eingerichtet ist/sind, um in einem Fehlerfall dem Benutzer zu signalisieren, dass alle am Netz angeschlossenen Geräte vom Netz zu trennen sind.

## Claims

1. Domestic appliance (1) having a power cable (2) which has a power plug (3) for connecting the domestic appliance (1) to an electrical power supply, and a control device (4) for controlling the operation of the domestic appliance (1), wherein the power plug (3) has a protection circuit (5), **characterised in that** a communication channel (6) for signal transmission is established between control device (4) and protection circuit (5).

2. Domestic appliance (1) according to claim 1, **characterised in that** the control device (4) has a first communication interface for the communication channel (6), which communication interface is designed to transmit electrical signals between control device (4) and protection circuit (5).

3. Domestic appliance (1) according to claim 1 or 2, **characterised in that** the protection circuit (5) has a control unit (9) comprising a second communication interface for the communication channel (6), which communication interface (6) is designed to transmit electrical signals between protection circuit (5) and control device (3).

4. Domestic appliance (1) according to one of the preceding claims, **characterised in that** the communication channel (6) is provided on the network cable (2) by means of an additional conductor (6.1).

5. Domestic appliance (1) according to claim 4, **characterised in that** the additional conductor (6.1) is designed to transmit a dedicated signal from the.control unit (9) of the protection circuit (5) to the control device (4) of the domestic appliance (1).

6. Domestic appliance (1) according to one of the preceding claims 1 to 4, **characterised in that** the communication channel (6) is provided by means of at least one supply conductor (10) of a multipole power cable (2) of the domestic appliance (1).

7. Domestic appliance (1) according to one of the preceding claims, **characterised in that** the communication channel (6) is designed to provide a bidirectional and/or unidirectional signal link.

8. Domestic appliance (1) according to one of the preceding claims, **characterised in that** the protection circuit (5) is designed to detect a malfunction of the domestic appliance (1).

9. Domestic appliance (1) according to one of the preceding claims, **characterised in that** the protection circuit (5) is designed to provide a fault signal indicating a malfunction of the protection circuit.

10. Domestic appliance (1) according to one of the preceding claims, **characterised in that** the protection circuit (5) has an internal voltage supply.

11. Domestic appliance (1) according to one of the preceding claims, **characterised in that** a display (11) and/or an acoustic indication device (12) is/are provided on the domestic appliance (1) which is/are designed to indicate a malfunction of the protection circuit (5).

12. Domestic appliance (1) according to claim 11, **characterised in that** the display (11) and/or the acoustic indication device (12) is/are designed to indicate to the user, in the event of a malfunction, that all the devices connected to the mains supply must be disconnected from the mains supply.

## Revendications

1. Appareil ménager (1) comprenant un cordon d'alimentation (2) qui présente une fiche de contact (3) pour le raccordement de l'appareil ménager (1) à une alimentation en énergie, et comprenant un dispositif de commande (4) destiné à la commande du fonctionnement de l'appareil ménager (1), la fiche de contact (3) présentant un circuit de protection (5), **caractérisé en ce qu'**un canal de communication (6) destiné à la transmission de signaux est disposé entre le dispositif de commande (4) et le circuit de protection (5).

2. Appareil ménager (1) selon la revendication 1, **caractérisé en ce que** le dispositif de commande (4) présente une première interface de communication pour le canal de communication (6), laquelle est configurée pour transmettre des signaux électriques entre le dispositif de commande (4) et le circuit de protection (5).

3. Appareil ménager (1) selon la revendication 1 ou 2, **caractérisé en ce que** le circuit de protection (5) présente un appareil de commande (9) muni d'une seconde interface de communication pour le canal de communication (6), laquelle est configurée pour transmettre des signaux électriques entre le circuit de protection (5) et le dispositif de commande (4).

4. Appareil ménager (1) selon l'une quelconque des revendications précédentes, **caractérisé en ce que** le canal de communication (6) est fourni sur le cordon d'alimentation (2) au moyen d'une ligne supplémentaire (6.1).

5. Appareil ménager (1) selon la revendication 4, **caractérisé en ce que** la ligne supplémentaire (6.1) est agencée pour transmettre un signal dédié de l'appareil de commande (9) du circuit de protection (5) vers le dispositif de commande (4) de l'appareil ménager (1).

6. Appareil ménager (1) selon l'une quelconque des revendications 1 à 4, **caractérisé en ce que** le canal de communication (6) est fourni au moyen d'au moins une ligne d'alimentation (10) d'un cordon d'alimentation multipolaire (2) de l'appareil ménager (1).

7. Appareil ménager (1) selon l'une quelconque des revendications précédentes, **caractérisé en ce que** le canal de communication (6) est réalisé de manière à transmettre une liaison de signal bidirectionnelle et/ou unidirectionnelle.

8. Appareil ménager (1) selon l'une quelconque des revendications précédentes, **caractérisé en ce que** le circuit de protection (5) est configuré pour détecter un fonctionnement défaillant de l'appareil ménager (1).

9. Appareil ménager (1) selon l'une quelconque des revendications précédentes, **caractérisé en ce que** le circuit de protection (5) est configuré pour fournir un signal d'erreur lequel signale un fonctionnement défaillant du circuit de protection.

10. Appareil ménager (1) selon l'une quelconque des revendications précédentes, **caractérisé en ce que** le circuit de protection (5) présente une alimentation en tension interne.

11. Appareil ménager (1) selon l'une quelconque des revendications précédentes, **caractérisé en ce qu'**un afficheur (11) et/ou un dispositif d'indication acoustique (12) est ménagé/sont ménagés sur l'appareil ménager (1), lequel est configurés/lesquels sont configurés pour signaler un fonctionnement défaillant du circuit de protection (5).

12. Appareil ménager (1) selon la revendication 11, **caractérisé en ce que** l'afficheur (11) resp. le dispositif d'indication acoustique (12) est configuré/sont configurés pour signaler à l'utilisateur en cas d'erreur que tous les appareils raccordés au réseau doivent être coupés du réseau.
